# EUROPEAN PATENT APPLICATION

(11) **EP 0 548 416 A1**
(43) Date of publication of application: **30.06.1993**
(21) Application number: 91309982.6
(22) Date of filing: 29.10.1991
(51) Int. Cl.: F02B 53/00, F02B 53/02, F01C 3/04, F01C 1/344, F01C 1/356

(54) **Rotary machine**

(30) Priority: 02.11.1990 GB 9023918
(71) Applicant: Anderson, Charles Abernethy, Aberdeen AB1 5XD (GB)
(72) Inventor: Stephen, Thomas Gordon, Aberdeen, AB2 7AN Scotland (GB)
(74) Representative: MacDougall, Donald Carmichael

(57) **Abstract**

A rotary machine comprises two circular elements one element (30) being fixed and the other element (23) being rotatable, the fixed element (30) being formed on the face contiguous with the moving element (23) with a succession of depressions (1) arranged in an annular formation around the rotational axis of the elements and the rotatable element supporting sliding vanes (25) urged to project axially from the rotatable element into the successive depressions of the fixed element (30) and in sealing contact with the following surface of said annular depressions and the fixed element is formed with inlet and outlet ports (6)(10) located to debouch into selected depressions at selected positions.

In the relative rotation of the elements the vanes in traversing the depressions define moving chambers of varying volume permitting the machine to operate as a pump or as a prime mover by igniting a fuel gas in each chamber as its volume increases.

## Description

This invention relates to a rotary machine in for the form of an internal combustion prime mover or in the form of a pump.

Internal combustion engines as used for powering vehicles of various types are generally in the form of one of the known types of reciprocating engines such as 2 and 4 stroke petrol engines and diesel type engines. These engines each have characteristics making them suitable for different uses but it has long been recognised that reciprocating engines have certain drawbacks which make the provision of a rotary type engine highly desirable. A number of previous proposals have been made of rotary type engines which have been developed with varying degrees of success and each of which has suffered from particular problems or disadvantages which has limited the practical application of such engines.

Accordingly, it is an object of the present invention to provide a rotary machine capable of being constructed as a motor or pump.

A rotary machine according to the invention comprises two circular co-axial elements arranged in series, one element being fixed and the other element being rotatable, the fixed element being formed on the face contiguous with the moving element with a succession of depressions arranged in an annular formation around the rotational axis of the elements and the rotatable element supporting sliding vanes arranged to be slidable in and to be urged to project axially from said contiguous face of the rotatable element into the successive depressions of the fixed element so as to remain in sealing contact with and follow the surface of said annular depressions, the fixed element being formed with inlet and outlet ports located to debouch into selected depressions at one or other end portion or both end portions of said depressions.

Where the rotary machine is to operate as a pump the depressions in the fixed element are quite separate from one another and a port is provided at each end of each depression, one port being an inlet port and the other being a discharge port, which port is an inlet port and which a discharge port depending on the direction of rotation of the rotatable element.

Where the rotary machine is to operate as an internal combustion engine the fixed element is formed with an even number of depressions arranged in successive pairs, each pair being interconnected by a shallow channel formed in the portion of the face formed with the depressions, the fixed element being formed with an inlet port opening into the entry end of the first depression of each pair, determined by the direction of rotation of the rotatable element and with an exhaust port opening from the trailing end of the second depression of each pair. Ignition means may be provided at the entry end of the second depression of each pair.

The portions of the face of the fixed element between successive pairs of depressions may be fitted with gas seals.

The two depressions of each pair may be contoured differently.

The depressions may be formed with sloping ends and may be semi-circular in cross section.

The ignition means may be sparking plugs for a spark-ignition engine or may be glow plugs for a compression ignition engine in which latter case a fuel injection nozzle is located at the entry end of the second depression of each pair. In certain circumstances where the compression is arranged to be high enough it may be unnecessary to provide ignition means.

In a spark-ignition engine the inlet ports are arranged for connection to a supply of gaseous fluid.

The vanes may project completely through the rotatable element and may engage an annular cam surface arranged to force the vanes into the depressions in the fixed element at the appropriate times as the rotatable element rotates. Alternatively the vanes may be spring urged to project into the depressions in the fixed element as the rotatable element rotates.

In another construction there are provided two fixed elements with a rotatable element between them, each fixed element being formed with similar depressions and ports as described, the rotatable elements presenting vanes slidable out from the opposite faces of the rotatable element to be engageable with the depressions in the respective fixed element. The vanes may be double-ended, the fixed elements being then so orientated angularly that the depressions on one element are opposite the portions of the face of the other fixed element between depressions, thus permitting each vane to co-operate with both fixed elements alternately as the rotatable element rotates.

Preferably the number of vanes is equal to or less than the number of depressions where the machine is to operate as a pump. Where the machine is to operate as an internal combustion engine it may be advantageous to provide that the number of vanes is somewhat greater than the number of pairs of depressions in the fixed element.

A practical embodiment of the invention constructed to operate as an internal combustion engine is illustrated in the accompanying semi-diagrammatic drawings in which Fig. 1 is a diagram formed as a linear development of the part of the fixed element formed with depressions showing one pair of depressions. Fig. 2 is an exploded view of the parts of a typical rotary machine having a single fixed element and Fig. 3 shows in section a rotary machine incorporating two fixed elements and double-ended vanes.

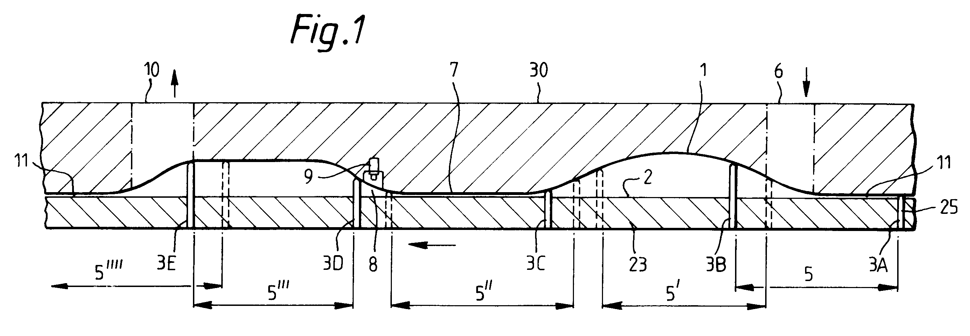

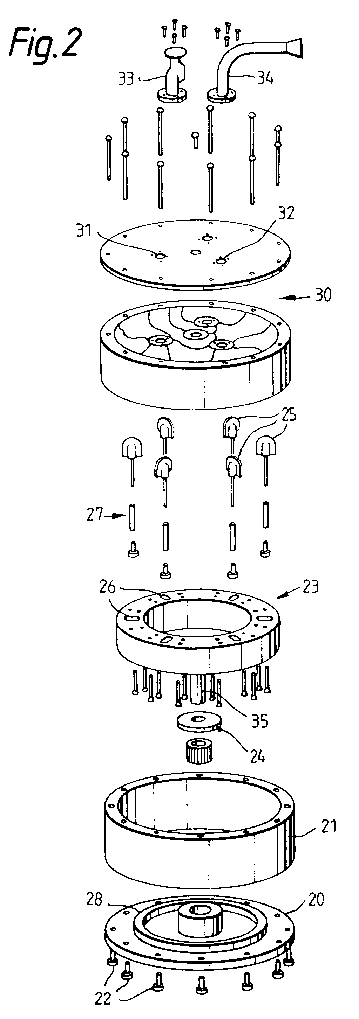

In the drawings and referring first to Fig. 1, 1 denotes the roof profile of the depressions in the fixed element 30 of Fig. 2. 2 denotes the contiguous surface of the rotatable element 23 of Fig. 2. 3A to 3E denote the positions of vanes 25 of Fig. 2 at a typical point in the operating cycle of the machine.

At the point in the operating cycle shown the chamber 5 defined between the vane portions 3A and 3B has a low volume and is open to a fuel mixture inlet 6. As the chamber 5 "moves" along to position 5^{l} its volume increases and fuel mixture is drawn in through the unlet 6. At this point the inlet is closed off by the vane at the trailing end of the chamber 5 and the chamber moves on to position 5^{ll} at which it is reduced in volume and the fuel mixture is forced through the shallow passage 7 between the adjacent pair of depressions to the small volume 8 into which an igniter 9 extends. The igniter ignites the mixture which expands to fill the volume created as the chamber 5 moves on to 5^{lll} and provides a drive thrust on the vane at the leading end of the chamber, said vane presenting a greater area than the following vane. The chamber 5 moves on to position 5^{llll}at which an exhaust 10 is open to allow the now burnt mixture to evacuate the chamber which finally continues past a seal 11 to return to a new starting point corresponding to the position 3A. Each of the chambers formed between adjacent vanes describes the same cycle in turn with each obviously being at a different stage at any one time. The rotary motion thus imparted to the rotatable element 23 is thus available at a drive shaft 35 extending from the rotatable element 23.

The particular combustion cycle described requires a machine having an even number of depressions operating in pairs and a number of vanes greater than the number of depressions.

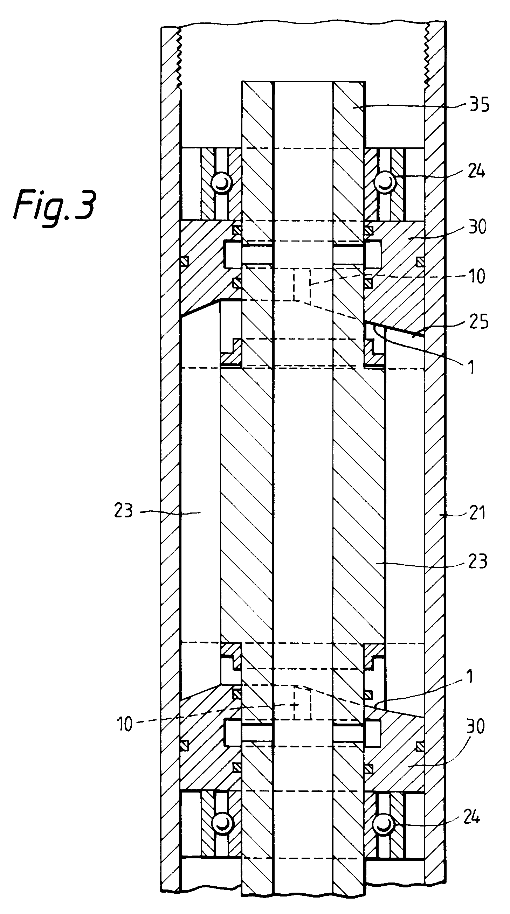

The machine illustrated in Figs. 2 and 3 comprises a base plate 20 which bolts to a main casing 21 by bolts 22. A rotatable element 23 is mounted on bearings 24 in the casing 21. Six vanes 25 are mounted in slots 26 in the rotatable element 23. Tappets 27 extend from the vanes 25 and are engaged by a cam 28 on the base plate 20. The upper ends of the vanes 25 engage the inner surfaces of the depressions formed in the fixed element 30 to which is attached a cover plate formed with inlet 31 and outlet 32 ports to which a carburettor 33 and exhaust 34 respectively are attached. The basic operating principal of the machine is previously described in connection with Fig. 1. Appropriate seals, not illustrated, are included between the working members as required.

The working parts may be arranged for water or air or oil cooling. As previously described there may be provided a fixed element 30 adjacent each face of the rotatable element 23 with double-ended vanes capable of projecting alternately from both faces of the rotatable element 23 to engage the depressions in the respective fixed element.

Where the machine is to operate as a pump the general arrangement of parts is the same as described but the depressions in the fixed element are unconnected with one another, each having an inlet port at one end and a discharge port at the other end and the number of vanes being preferably although not necessarily equal to the number of depressions in the fixed element.

In the construction of Fig. 3 the vanes 23 are double-ended, each end bearing against the roof 1 of the depression in a respective fixed element 30. There is no need in this construction for cams or other mechanism to operate the vanes 23. The roof 1 in the depressions in the respective fixed elements 30 act alternately to cause the vanes to slide in the rotatable element 23. The other parts of this illustrated construction bear the same reference numerals as the corresponding parts in Figs. 1 and 2.

In operation the rotatable element 23 with its vanes 25 co-operates with the depressions in each respective fixed element 30 as a separate unit. Used as a pump the shaft 35 is connected to a driving device such as an electric motor and causes the rotatable element 23 to rotate. During this action the vanes 25 slide in and out of the depression whereby to draw in and expel fluid continuously. Several pump units as in Fig. 3 may be coupled in series, i.e. the rotatable elements are coupled axially to one another, and to a single electric motor to provide a compact multiple pump unit.

The unit of Fig. 3 may, of course, be arranged to operate as a prime mover by connecting the inlet ports to a fuel supply and providing ignition means. Once again several such units may be coupled axially to provide a prime mover with a very smooth torque and little fluctuation of torque.

## Claims

1. A rotary machine comprising two circular elements (23)(30) one of which (30) is fixed and the other (23) of which is rotatable, characterized in that the elements are co-axial and arranged in axial series, the fixed element (30) is formed on the face contiguous with the moving element (23) with a succession of depressions (1) arranged in an annular formation around the rotational axis of the elements and the rotatable element (23) supports sliding vanes (25) arranged to be slidable in and to be urged to project axially from said contiguous face of the rotatable element (23) into the successive depressions (1) of the fixed element (30) so as to remain in sealing contact with and follow the surface of said annular depressions and the fixed element is formed with inlet and outlet ports (6)(10) located to debouch into selected depressions at one or other end portion or both end portions of said depressions.

2. A rotary machine according to claim 1, characterized in that the depressions in the fixed element (30) are quite separate from one another and a port (6,10) is provided at each end of each depression, one port being an inlet port and the other being a discharge port, which port is an inlet port and which a discharge port depending on the direction of rotation of the rotatable element.

3. A rotary machine according to claim 1, characterized in that the fixed element is formed with an even number of depressions arranged in successive pairs, each pair being interconnected by a shallow channel (7) formed in the portion of the face formed with the depression and the fixed element (30) is formed with an inlet port (6) opening into the entry end of the first depression of each pair, determined by the direction of rotation of the rotatable element and with an exhaust port (10) opening from the trailing end of the second depression of each pair.

4. A rotary machine according to claim 3, characterized in that ignition means (9) is provided at the entry end of the second depression of each pair.

5. A rotary machine according to claim 3, characterized in that the portions of the face of the fixed element between successive pairs of depressions are fitted with gas seals (11).

6. A rotary machine according to claim 3, characterized in that the two depressions of each pair are contoured differently.

7. A rotary machine according to claim 1, characterized in that the vanes (25) project completely through the rotatable element (23) and engage an annular cam surface (28) arranged to force the vanes (25) into the depressions in the fixed element at the appropriate times as the rotatable element rotates.

8. A rotary machine as claimed in claim 1 , characterized in that the vanes are spring urged to project into the depressions in the fixed element as the rotatable element rotates.

9. A rotary machine according to claim 1, characterized in that there are provided two fixed elements (30) with a rotatable element (23) between them, each fixed element being formed with similar depressions and ports as described, the rotatable elements presenting vanes (25) slidable out from the opposite faces of the rotatable element to be engageable with the depressions in the respective fixed element.

10. A rotary machine according to claim 9, characterized in that the vanes (25) are double-ended, the fixed elements (30) being then so orientated angularly that the depressions on one element (30) are opposite the portions of the face of the other fixed element (30) between depressions, thus permitting each vane to co-operate with both fixed elements alternately as the rotatable element rotates.
